# EUROPÄISCHE PATENTSCHRIFT

(11) **EP 2 213 402 B1**
(45) Veröffentlichungstag und Bekanntmachung des Hinweises auf die Patenterteilung: **09.05.2018**
(21) Anmeldenummer: 10001044.6
(22) Anmeldetag: 02.02.2010
(51) Int. Cl.: B23K 9/167, B23K 9/28

(54) **Brenner für das Wolfram-Inertgas-Schweißen, Elektrodeneinheit für und Verfahren zum Betreiben des Brenners**
TIG welding torch, electrode unit for and method for operating the Torch
Brûleur pour le soudage de gaz inerte de tungstène, unité d'électrodes pour brûleur et procédé de fonctionnement du brûleur

(30) Priorität: 03.02.2009 DE 102009008250
(43) Veröffentlichungstag der Anmeldung: 04.08.2010
(73) Patentinhaber: Kjellberg Finsterwalde Plasma und Maschinen GmbH, 03238 Finsterwalde (DE)
(72) Erfinder: Schuster, Henning, 01279 Dresden (DE); Schnick, Michael, 09353 Oberlungwitz (DE); Zschetzsche, Jörg, Dr.-Ing., 01129 Dresden (DE); Fuentes Munoz, Julio, 01159 Dresden (DE)
(74) Vertreter: Pfenning, Meinig & Partner mbB

(56) Entgegenhaltungen:
- EP-A1- 2 008 750
- US-A- 3 076 085
- US-A- 3 676 639

## Beschreibung

Die Erfindung betrifft einen Brenner für das Wolfram-Inertgas-Schweißen und ein Verfahren zum Betreiben des Brenners. Der Brenner ist bevorzugt dafür ausgelegt, dass er mit hoher elektrischer Stromstärke betrieben werden kann.

Bei den weit verbreiteten Wolfram-Inertgas-Schweißbrennern brennt ein Lichtbogen zwischen einer sich nicht verbrauchenden Wolframelektrode und einem Werkstück. Die Elektrode ist üblicherweise überwiegend als Kathode geschaltet. Da die Emission von Elektronen als freie Ladungsträger im Wesentlichen durch hohe Temperaturen erreicht wird, ist es gewünscht in der Elektrode hohe Leistungsdichten zu erzielen. Durch eine konische kegelförmige Gestalt kann dies erreicht werden. Außerdem ist es gewünscht, dass der Ausgangspunkt des Lichtbogens so nah wie möglich in Richtung des Werkstückes liegt, was durch die konische Gestalt der Elektrodenspitze unterstützt wird.

Für die an der Elektrode auftretenden hohen Temperaturen ist eine Kühlung erforderlich, um deren Verschleiß zu verhindern bzw. zumindest zu begrenzen.

Üblicherweise wird auch das inerte Gas durch den Brenner in Richtung auf das Werkstück geführt. Hierfür ist eine Inertgasdüse vorhanden, die als Ringdüse ausgebildet sein kann. Dadurch kann das Inertgas als geschlossener Schleier um den Lichtbogen ausgebildet werden. Die Inertgasdüse umgibt dabei die Elektrode, die in deren Mitte angeordnet ist.

Unter anderem ist es auch aus US 5,892,199 bekannt, eine Wolframelektrode in einem Halter aus einem Metall mit guter thermischer Leitfähigkeit in einem Brenner zu fixieren, so dass die Wärme durch den Halter zum Kühlmittel abgeführt werden kann. Der Halter mit der Wolframelektrode soll dabei im Brenner mit einer Schraubverbindung befestigt werden, um einen Austausch zu ermöglichen. Dabei kann es aber zu Positionierfehlern beim Befestigen kommen, so dass es zu Fehlern beim gewünschten Überstand der Elektrodenspitze aus dem Brenner kommen kann. Auch durch eine undefinierte Befestigung der Wolframelektrode im Halter können unterschiedliche Überstände der Wolframelektrode aus dem Halter auftreten, so dass die Reproduzierbarkeit nicht vollständig gegeben ist.

Bei dem aus diesem Stand der Technik bekannten Brenner weist aber auch das Kühlsystem Defizite auf. Kühlmittel wird durch einen mantelförmigen Hohlraum geführt. Dabei kann eine nur unzureichende Wärmeabfuhr von der Wolframelektrode über den Halter und ein weiteres rohrförmiges Element, an dem der Halter mit der Wolframelektrode befestigt ist, erreicht werden. Auch die Strömungsverhältnisse des Kühlmittels innerhalb des Brenners weisen Defizite auf. Es wird im Wesentlichen mit laminarer Strömung gekühlt.

In EP 2 008 750 A1 ist ein Wolfram-Inertgas-Schweißbrenner beschrieben, bei dem eine Elektrode in einer Halterung am Brenner befestigt ist und durch in einen Hohlraum zugeführte Flüssigkeit eine Kühlung erreicht werden kann.

Ähnliche Ausführungen solcher Brenner sind auch aus US 3,076,085 B1 und US 3,676,639 B1 bekannt.

Es ist daher Aufgabe der Erfindung einen Brenner für das Wolfram-Inertgas-Schweißen zu Verfügung zu stellen, der bei hohen elektrischen Stromstärken mit reduziertem Verschleiß einsetzbar ist und bei dem Elektrodeneinheiten eingesetzt sind, die jeweils konstante Parameter aufweisen und die definiert an einem Brennergehäuse befestigt werden können.

Erfindungsgemäß kann diese Aufgabe mit einem Brenner, der die Merkmale des Anspruchs 1 aufweist, gelöst werden. Er kann mit einem Verfahren nach Anspruch 4 betrieben werden.

Vorteilhafte Ausgestaltungen und Weiterbildungen der Erfindung können mit in untergeordneten Ansprüchen bezeichneten Merkmalen erreicht werden.

Ein erfindungsgemäßer Brenner für das Wolfram-Inertgas-Schweißen weist ein Gehäuse auf in dem eine Elektrodeneinheit mittels eines Elektrodenhalters gehalten ist. Die Elektrodeneinheit ist dabei von einer Inertgasdüse umgeben durch die das inerte Gas in an sich bekannter Form, in Richtung auf das Werkstück zu, um den ausgebildeten Lichtbogen herum strömt.

Es ist auch eine Kühleinrichtung innerhalb des Gehäuses vorhanden, durch die flüssiges Kühlmedium, bevorzugt Wasser, in das Gehäuse hinein und aus dem Gehäuse wieder heraus geführt werden kann.

Die Elektrodeneinheit ist mit mindesten zwei Teilen, bevorzugt zweiteilig ausgebildet, wobei eine sich konisch in Richtung eines Werkstücks verjüngende Elektrode aus Wolfram oder einer Wolframlegierung in einem Schaftelement aus einem Metall mit einer thermischen Leitfähigkeit größer 270 W/mK kraft- und/oder stoffschlüssig fixiert ist. Die Elektrodeneinheit ist mit dem Elektrodenhalter in einer Aufnahme am Elektrodenhalter ausschließlich mittels einer Presspassung und/oder stoffschlüssig gehalten. Für eine definierte Positionierung am Brenner ist am Schaftelement ein flanschförmiger Ansatz ausgebildet, der bei der Befestigung einen Anschlag bildet. Dies kann aber auch allein oder zusätzlich mit einer Stirnfläche des Schaftelementes erreicht werden. Diese Stirnfläche kann einen Anschlag bilden oder ein Anschlag kann daran ausgebildet sein. Beim Einsetzen kann dadurch eine Wegbegrenzung erreicht werden, so dass eine in den Brenner eingesetzte Elektrode exakt positioniert ist. Die hierfür genutzte Stirnfläche weist dabei in das Innere des Brenners in Richtung auf die Austrittsöffnung eines Kühlrohres oder einen Hohlraum.

Der erfindungsgemäße Brenner für das Wolfram-Inertgas-Schweißen kann mit elektrischen Stromstärken, die mindestens 250 A betragen, betrieben werden. Es sind aber auch weitaus höhere elektrische Stromstärken bis in den Bereich um ca. 1.000 A möglich.

Wie bereits zum Ausdruck gebracht, ist eine Elektrodeneinheit an einem erfindungsgemäßen Brenner vorhanden, bei der die jeweilige Elektrode in einem Schaftelement definiert fixiert gehalten ist. Insbesondere wenn die Elektrode im Schaftelement durch eine Presspassung, also kraftschlüssig gehalten ist, ist es vorteilhaft, im Schaftelement parallel zu dessen Längsachse eine Bohrung auszubilden, wodurch der Halt der Elektrode in diesen Fällen im Schaftelement deutlich verbessert werden kann.

Bei den während des Betriebes eines erfindungsgemäßen Brenners auftretenden hohen Temperaturen hat auch die jeweilige Kühlung eine größere Bedeutung, um Beschädigungen oder Verschleiß an Elektrodeneinheit und insbesondere der Elektrode vermeiden zu können. Hierfür ist im Elektrodenhalter ein Hohlraum ausgebildet, in den flüssiges Kühlmittel über ein Kühlrohr hinein- und wieder aus diesem Hohlraum abgeführt werden kann. Die Austrittsöffnung des Kühlrohres sollte dabei in Richtung der im Elektrodenhalter gehaltenen Elektrodeneinheit weisen. Sie soll in einem Abstand H zum Boden dieses Hohlraumes oder einer in Richtung auf die Austrittsöffnung weisenden Stirnfläche des Schaftelementes angeordnet sein. Im letztgenannten Fall bildet dann diese Stirnfläche den Boden bzw. einen Teil des Bodens eines Hohlraumes, und das flüssige Kühlmittel kann nach dem Austritt aus der Austrittsöffnung des Kühlrohres unmittelbar auf diese Stirnfläche des Schaftelementes auftreffen. Hierfür ist der Elektrodenhalter entsprechend ausgebildet, so dass die Elektrodeneinheit mit dem Schaftelement so in den Elektrodenhalter eingesetzt und fixiert werden kann, dass mit dem Schaftelement ein flüssigkeitsdichter Verschluss des Hohlraumes innerhalb des Elektrodenhalters erreichbar ist.

Vorteilhaft kann es außerdem sein, das Schaftelement so auszubilden, dass es sich in Richtung der Austrittsöffnung des Kühlrohres konisch verjüngt. Es kann dabei in Form eines Kegelstumpfes ausgebildet sein. Es ist aber auch eine kegelförmige Ausbildung möglich, wobei in diesem Fall dann auch die vom flüssigen Kühlmittel angeströmte Stirnfläche einen Kegel bilden kann.

Für die ausreichende Kühlung sollen bestimmte geometrische und strömungstechnische Parameter berücksichtigt werden. Konkrete Angaben hierzu sollen nachfolgend bei der Beschreibung von Ausführungsbeispielen angegeben werden. So spielt das Verhältnis des Abstandes der Austrittsöffnung des Kühlrohres zum Boden des Hohlraumes oder der Stirnfläche des Schaftelementes in Bezug zum Innendurchmesser des Kühlrohres eine Rolle. Ein weiterer zu beachtender Parameter kann das Verhältnis des Durchmessers des Hohlraumes im Bereich zwischen der Austrittsöffnung des Kühlrohres und dem Boden des Hohlraumes bzw. der Stirnfläche des Schaftelementes, die bei einer direkten Anströmung mit Kühlmittel beaufschlagt werden kann, und dem Innendurchmesser des Kühlrohres sein.

Neben diesen Dimensionierungsparametern kann auch eine Beeinflussung des Volumenstromes, mit dem flüssiges Kühlmittel durch das Kühlrohr in den Hohlraum geführt werden kann, berücksichtigt werden. Dabei soll eine hochturbulente Strömung innerhalb des Hohlraumes auftreten, deren Reynolds-Zahl größer als das Zweifache der kritischen Reynolds-Zahl ist. Dadurch kann mit dem flüssigen Kühlmittel, das bevorzugt eine Vorlauftemperatur im Bereich zwischen 30 und 40 °C aufweisen sollte, eine ausreichende Wärmemenge abgeführt werden und eine entsprechende Kühlung von Elektrodeneinheit und insbesondere der Elektrode erreicht werden.

Dabei kann mit Volumenströmen für das flüssige Kühlmittel im Bereich 1,5 bis 12 1/min gearbeitet werden. Der erforderliche Kühlmittelvolumenstrom kann sich dabei auch nach den elektrischen Parametern, insbesondere der elektrischen Stromstärke, mit der der erfindungsgemäße Brenner betrieben wird, richten. So können bei höheren elektrischen Stromstärken auch höhere Kühlmittelvolumenströme in den Hohlraum eines Elektrodenhalters einströmen und aus diesem dann entsprechend wieder abgeführt werden.

Mit der Erfindung kann besonders vorteilhaft Einfluss auf den Bereich der Elektrode, von dem aus die Elektronen emittiert werden, genommen werden. Dieser Bereich kann sehr weit in die Richtung der Spitze der Elektrode, die in Richtung des Werkstücks weist, verschoben werden. Dabei wirken sich die konische Gestalt der Elektrode und die effektive Kühlung gemeinsam günstig aus. Durch die konische Gestalt erhöht sich dort die elektrische Stromdichte und durch die Kühlung kann die Temperatur ausgehend von der in Richtung des Inneren des Brenners weisenden Stirnfläche der Elektrode verringert werden, so dass die für die Emission der Elektronen erforderliche Temperatur erst im Bereich der Spitze der Elektrode erreicht werden kann.

Nachfolgend soll die Erfindung anhand von Ausführungsbeispielen näher erläutert werden.

Dabei zeigen:
- Fig. 1: in einer Schnittdarstellung ein erstes Beispiel eines erfindungsgemäßen Brenners;
- Fig. 2: ein zweites Beispiel eines erfindungsgemäßen Brenners in einer Schnittdarstellung;
- Fig. 3: ein Beispiel einer Elektrodeneinheit;
- Fig. 4: ein weiteres Beispiel einer an einem erfindungsgemäßen Brenner einsetzbaren Elektrodeneinheit;
- Fig. 5: zwei Beispiele für Ausführungsformen von Elektrodenspitzen;
- Fig. 6: einen Teilschnitt durch ein Beispiel einer Elektrodeneinheit, die an einem erfindungsgemäßen Brenner einsetzbar ist;
- Fig. 7: in schematischer Form geometrische Verhältnisse im Bereich eines Hohlraumes an einem Elektrodenhalter mit einem Kühlrohr;
- Fig. 8: ein Diagramm, das die Verhältnisse der Nusselt-Zahl in Abhängigkeit der Reynolds-Zahl bei unterschiedlichen Kühlrohrinnendurchmessern und Abständen der Austrittsöffnung zu einem Boden des Hohlraums, der im Elektrodenhalter vorhanden ist, wiedergibt; und
- Fig. 9: ein Diagramm, mit dem die Abhängigkeit der Reynolds-Zahl bei unterschiedlichen Kühlrohrinnendurchmessern und unterschiedlichen Kühlmittelvolumenströmen wiedergegeben ist.

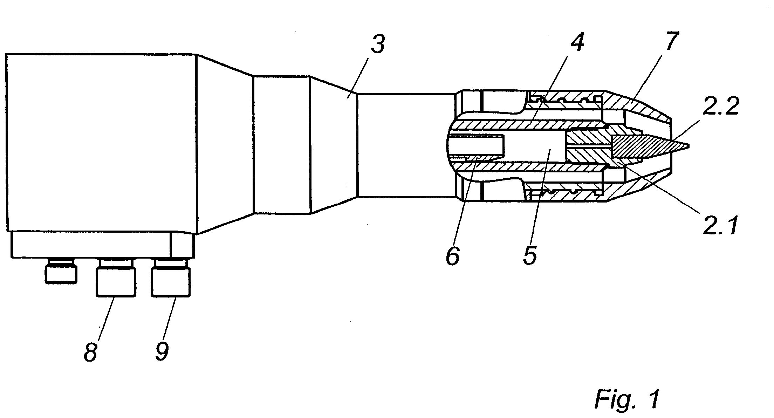

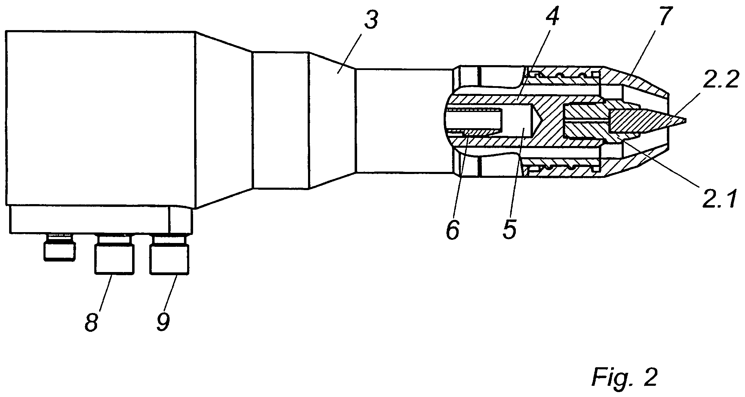

Mit den Figuren 1 und 2 sind zwei Beispiele eines erfindungsgemäßen Brenners für das Wolfram-Inertgas-Schweißen in einer Schnittdarstellung gezeigt.

Dabei ist jeweils an einem Gehäuse 3 eine Inertgasdüse 7 vorhanden, die mittels einer Schraubverbindung am Gehäuse 3 befestigt ist.

Innerhalb des Gehäuses 3 ist ein langgestreckter Elektrodenhalter 4 vorhanden, an dem eine Elektrodeneinheit 2, die mit einer Elektrode 2.2 und einem Schaftelement 2.1 gebildet ist, befestigt ist. Bei den gezeigten zwei Beispielen erfolgte die Befestigung der Elektrodeneinheit 2 am Elektrodenhalter 4 mittels einer Presspassung.

Durch den Elektrodenhalter 4 ist ein Kühlrohr 6 geführt, dessen Austrittsöffnung in Richtung auf die Elektrodeneinheit 2 weist.

Als Kühlmittel kann Wasser durch den Einlassstutzen 8 über das Kühlrohr 6 in das Innere des Elektrodenhalters 4 strömen, wobei zwischen der Austrittsöffnung des Kühlrohres 6 und dem Elektrodenelement 2 ein Hohlraum 5 ausgebildet ist.

Das in Fig. 1 gezeigte Beispiel unterscheidet sich vom Beispiel nach Fig. 2 dadurch, dass das flüssige Kühlmittel aus der Austrittsöffnung des Kühlrohres 6 unmittelbar auf die Stirnfläche 2.3 des Schaftelementes 2.1 auftreffen kann und so eine direkte Kühlung erreichbar ist.

Beim in Fig. 2 gezeigten Beispiel ist die Elektrodeneinheit 2 im Elektrodenhalter 4 innerhalb einer Aufnahme mittels Presspassung gehalten, und das aus der Austrittsöffnung des Kühlrohres 6 austretende flüssige Kühlmittel trifft auf einen Boden eines im Elektrodenhalter 4 ausgebildeten Hohlraums auf. Das flüssige Kühlmittel kann über einen Kühlmittelauslassstutzen 9 wieder aus dem Brenner heraustreten und abgeführt werden. Mittels eines Wärmetauschers kann das erwärmte flüssige Kühlmittel dann wieder auf eine Zufuhrtemperatur zwischen 35 °C und 40 °C abgekühlt und über den Kühlmitteleintrittsstutzen 8 durch das Kühlrohr 6 wieder für die Kühlung zugeführt werden.

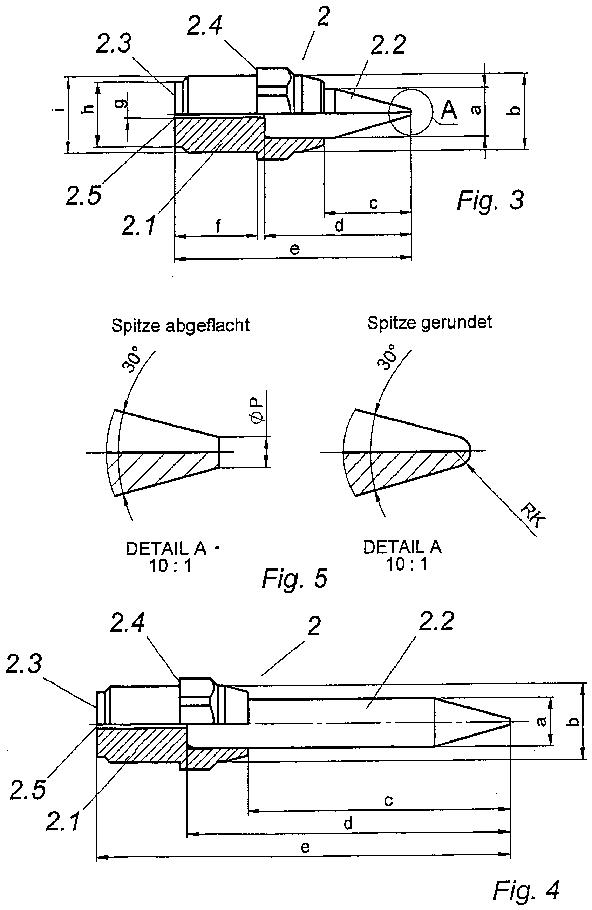

Bei den beiden Beispielen und insbesondere in Verbindung mit den Figuren 3, 4 und 6 wird deutlich, dass am Schaftelement 2.1 ein Ansatz 2.4 ausgebildet ist, mit dem gesichert werden kann, dass eine definierte Fixierung und Positionierung einer jeweiligen Elektrodeneinheit 2 am Brenner und am Elektrodenhalter 4 erreicht werden kann. Dies kann aber auch in nicht dargestellter Form durch geeignete Gestaltung und Dimensionierung des Schaftelementes 2.1 und des Elektrodenhalters 4 erreicht werden, so dass die Elektrodeneinheit 2 definiert in den Brenner eingesetzt werden kann und die nach außen weisende Spitze der Elektrode 2.2 mit vorgegebener definierter Länge aus dem Brenner herausragt. Dies ist auch bei einem Austausch einer verschlissenen Elektrode 2.2 wieder möglich.

Ist dann eine Elektrode 2.2 oder eine ganze Elektrodeneinheit 2 verschlissen oder beschädigt, kann die Presspassung der Elektrodeneinheit 2 mit dem Schaftelement 2.1 vom Elektrodenhalter 4 wieder getrennt und durch eine neue Elektrodeneinheit 2 ersetzt werden. Auch in diesem Fall kann eine positionierte Fixierung der Elektrodeneinheit 2 mittels Presspassung ohne weiteres wieder erreicht werden.
Mit den Fign. 3 - 5 sollen Möglichkeiten für die Dimensionierung und geometrische Ausbildung von Elektrodeneinheiten 2 sowie Spitzen von Elektroden 2.2 verdeutlicht werden.

Dabei ist in Fig. 3 eine Elektrodeneinheit 2 mit relativ kurzer Elektrode 2.2 im Verhältnis zur in Fig. 4 gezeigten Elektrodeneinheit 2 dargestellt.

Die beiden Elektroden 2.2 haben dabei eine Länge d und ragen mit einer Länge c als Überstand aus dem Schaftelement 2.1 heraus.

Bei den in Fign. 3 und 4 gezeigten Beispielen von Elektrodeneinheiten 2 sind im Schaftelement 2.1 Bohrungen 2.5 in der Längsachse der Elektrodeneinheit 2 und demzufolge auch der Längsachse des Schaftelementes 2.1 ausgebildet. Dies wird in den Fign. 3 und 4 insbesondere durch die Schnittdarstellung unterhalb der Längsachse, die mit der strichpunktierten Linie gekennzeichnet ist, deutlich.

Mit Fig. 5 soll verdeutlicht werden, dass Spitzen von Elektroden 2.2 in Form eines abgeschnittenen Kegelstumpfes, aber auch in abgerundeter Form ausgebildet sein können. Ein bevorzugter Konuswinkel für eine Spitze einer Elektrode 2.2 ist 30°. Es können aber auch größere oder kleinere Konuswinkel gewählt werden.

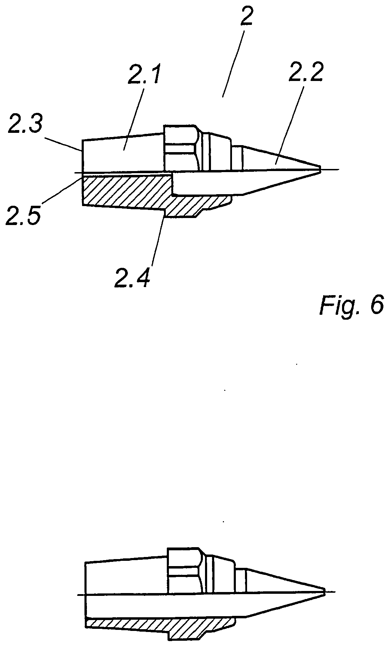

In Fig. 6 ist ein weiteres Beispiel für eine an einem erfindungsgemäßen Brenner einsetzbare Elektrodeneinheit 2 gezeigt. Hier ist das Schaftelement 2.1 sich ebenfalls konisch verjüngend ausgebildet. Dabei weist der sich verjüngende Bereich des Schaftelementes 2.1 in Richtung des Hohlraums 5 oder auch der Austrittsöffnung des Kühlrohres 6. Am Elektrodenhalter 4 ist dann eine entsprechend komplementär ausgebildete Aufnahme vorhanden, in die ein Schaftelement 2.1 mit Elektrode 2.2 passgerecht eingeführt und darin in definierter Form positioniert fixiert werden kann.

Neben den bevorzugten Presspassungen für die Verbindung von Elektrode 2.2 mit Schaftelement 2.1 oder die Verbindung von Schaftelement 2.1 mit Elektrodenhalter 4 können aber auch stoffschlüssige Verbindungen, z. B. durch Löten oder Schweißen, hergestellt werden. In diesen Fällen muss jedoch darauf geachtet werden, dass eine Schweißverbindung oder ein für eine Lotverbindung eingesetztes Lot eine ausreichende Temperaturfestigkeit erreichen. Unabhängig davon, ob die Verbindung durch Presspassung oder Stoffschluss erreicht worden ist, kann so eine verbesserte Wärmeleitung von Elektrode 2.2, Schaftelement 2.1 zum Elektrodenhalter 4 und das flüssige Kühlmedium gewährleistet werden.

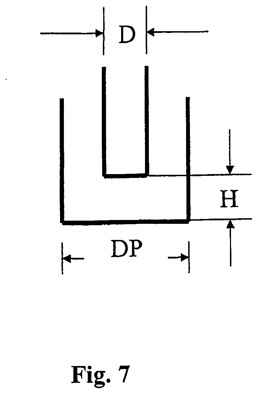

In Fig. 7 ist in stark schematisierter Form dargestellt, wie bestimmte geometrische Parameter an einem erfindungsgemäßen Brenner zu berücksichtigen sind. So wird mit Fig. 7 deutlich, dass D der Durchmesser des Kühlrohres 6, H der Abstand der Austrittsöffnung des Kühlrohres 6 zum Boden des Hohlraumes 5 bzw. der Stirnfläche 2.3 des Schaftelementes 2.1 und DP der Innendurchmesser des Hohlraumes 5 sind.

Der Innendurchmesser D des Kühlrohres 6 sollte zumindest im Bereich der Austrittsöffnung im Bereich 1,5 bis 10 mm, bevorzugt bis 8 mm gewählt werden.

Das Verhältnis des Abstandes H in Bezug zum Innendurchmesser D sollte zwischen 1,25 bis 5, bevorzugt zwischen 1,5 bis 4 eingehalten sein.

Das Verhältnis des Innendurchmessers DP des Hohlraumes 5 in Bezug zum Innendurchmesser D des Kühlrohres 6 sollte im Bereich 1,5 bis 4, bevorzugt im Bereich 1,7 bis 3,5 gehalten sein.

Für eine ausreichende Kühlung sollten die Kühlflüssigkeitsvolumenströme, die bereits im allgemeinen Teil der Beschreibung genannt worden sind, eingehalten werden.

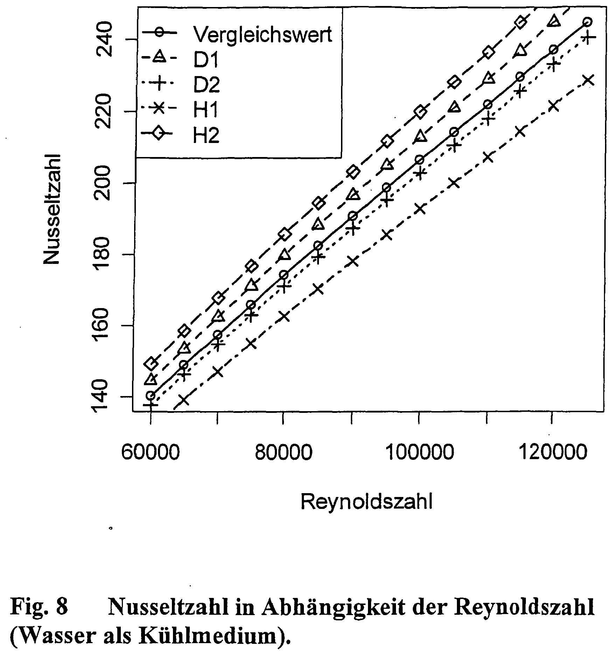

Mit dem in Fig. 8 gezeigten Diagramm kann die starke Abhängigkeit der Nusselt-Zahl von der Reynolds-Zahl durch lineare Anstiege verdeutlicht werden. Außerdem kann festgehalten werden, dass ein größerer Abstand H zu einer höheren Nusselt-Zahl führt und bei gleichen Reynolds-Zahlen die Nusselt-Zahlen ansteigen, wenn der Innendurchmesser D kleiner wird.

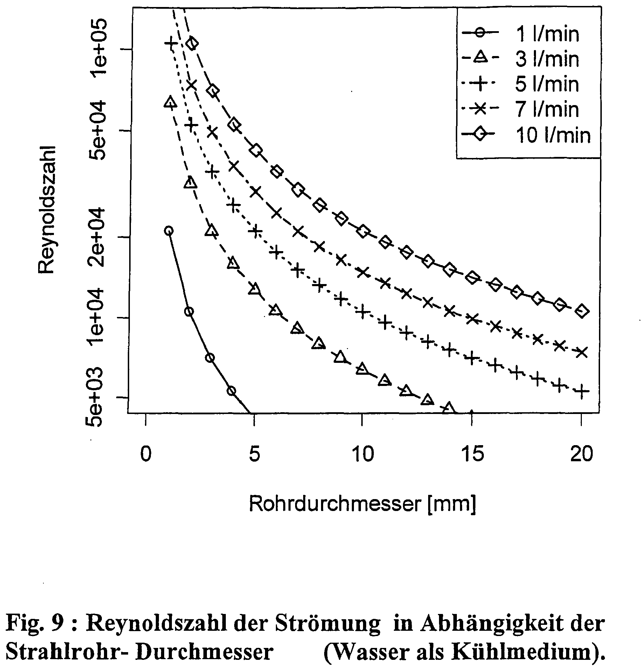

Mit dem in Fig. 9 gezeigten Diagramm kann der starke Einfluss des Innendurchmessers D des Kühlrohres 6 auf die Reynolds-Zahl verdeutlicht werden. So steigt mit kleiner werdendem Innendurchmesser D die Reynolds-Zahl an. Resümierend kann festgehalten werden, dass der Kühlmitteldurchfluss einen sehr erheblichen Einfluss auf die Reynolds-Zahl hat.

## Patentansprüche

1. Brenner für das Wolfram-Inertgas-Schweißen, bei dem in einem Gehäuse eine Elektrodeneinheit mittels eines Elektrodenhalters gehalten, dabei die Elektrodeneinheit von einer Inertgasdüse umgeben und eine Kühleinrichtung innerhalb des Gehäuses vorhanden ist, durch die flüssiges Kühlmedium in das Gehäuse hinein und aus dem Gehäuse wieder heraus geführt ist und
die Elektrodeneinheit mit mindestens zwei Teilen ausgebildet ist, wobei eine sich konisch in Richtung eines Werkstücks verjüngende Elektrode aus Wolfram oder einer Wolframlegierung in einem Schaftelement aus einem Metall mit einer thermischen Leitfähigkeit größer 270 W/mK kraft- und/oder stoffschlüssig fixiert ist,
**dadurch gekennzeichnet, dass**
die Elektrodeneinheit (2) mit dem Elektrodenhalter (4) in einer Aufnahme am Elektrodenhalter (4) ausschließlich mittels einer Presspassung und/oder stoffschlüssig gehalten ist und am Schaftelement (2.1) für eine definierte Positionierung ein flanschförmiger Ansatz (2.4) ausgebildet ist und/oder eine Stirnfläche (2.3) des Schaftelementes (2.1) einen Anschlag bildet oder ein Anschlag an der Stirnfläche (2.3) ausgebildet ist; und
im Elektrodenhalter (4) ein Hohlraum (5) ausgebildet ist, in den flüssiges Kühlmittel über ein Kühlrohr (6) hinein und wieder heraus geführt ist, dabei die Austrittsöffnung des Kühlrohres (6) in Richtung der im Elektrodenhalter (4) gehaltenen Elektrodeneinheit (2) weist und in einem Abstand H zum Boden des Hohlraumes (5) oder der Stirnfläche (2.3) des Schaftelementes (2.1) angeordnet ist; wobei
ein Verhältnis des Abstandes H zum Innendurchmesser D des Kühlrohres (6) von 1,25 bis 5 und/oder
ein Verhältnis des Durchmessers DP des Hohlraumes (5) im Bereich zwischen Austrittsöffnung des Kühlrohres (6) und dem Boden des Hohlraumes (5) oder der Stirnfläche (2.3) des Schaftelementes (2.1) und dem Innendurchmesser D des Kühlrohres (6) von 1,5 bis 4 eingehalten ist.

2. Brenner nach Anspruch 1, **dadurch gekennzeichnet, dass** im Schaftelement (2.1) parallel zu dessen Längsachse eine Bohrung (2.5) ausgebildet ist.

3. Brenner nach einem der vorhergehenden Ansprüche, **dadurch gekennzeichnet, dass** das Schaftelement (2.1) sich in Richtung der Austrittsöffnung des Kühlrohres (6) konisch verjüngend ausgebildet ist.

4. Verfahren zum Betreiben eines Brenners nach einem der vorhergehenden Ansprüche, **dadurch gekennzeichnet, dass** der Brenner mit einer elektrischen Stromstärke von mindestens 250 A betrieben wird; dabei
ein Abstand H zwischen der Austrittsöffnung des Kühlrohres (6) und dem Boden des Hohlraumes (5) oder der Stirnfläche (2.3) des Schaftelementes (2.1) eingehalten ist und
die Austrittsöffnung des Kühlrohres (6) und der Hohlraum (5) im Bereich zwischen der Austrittsöffnung und dem Boden des Hohlraumes (5) oder der Stirnfläche (2.3) des Schaftelementes (2.1)so dimensioniert sind sowie
mit dem Volumenstrom des flüssigen Kühlmittels, der durch das Kühlrohr (6) geführt wird, eine hochturbulente Strömung nach dem Austritt aus der Austrittsöffnung ausgebildet wird, bei der eine Reynoldszahl, die größer als das 2-Fache der kritischen Reynoldszahl ist, eingehalten wird.

## Claims

1. Torch for tungsten inert gas welding, in which an electrode unit is held by means of an electrode holder in a housing, wherein the electrode unit is surrounded by an inert gas nozzle and a cooling installation is present within the housing, liquid cooling medium being directed into the housing and out of the housing again by way of said cooling installation, and
the electrode unit is configured so as to have at least two parts, whereby an electrode from tungsten or from a tungsten alloy that tapers conically in the direction of a workpiece is fixed in a force-fitting and/or materially integral manner in a shaft element from a metal having a thermal conductivity of more than 270 W/mK, **characterized in that**
the electrode unit (2) by way of the electrode holder (4) is held exclusively by means of an interference fit and/or in a materially integral manner in a receptacle on the electrode holder (4), and for a defined positioning on the shaft element (2.1) a flange-shaped appendage (2.4) is configured, and/or an end face (2.3) of the shaft element (2.1) forms a detent, or a detent is configured on the end face (2.3); and
a cavity (5) into which liquid coolant is directed and directed out again by means of a cooling pipe (6) is configured in the electrode holder (4), whereby the exit opening of the cooling pipe (6) points in the direction of the electrode unit (2) that is held in the electron holder (4) and is disposed at a spacing H from the base of the cavity (5) or from the end face (2.3) of the shaft element (2.1); wherein
a ratio of the spacing H to the internal diameter D of the cooling pipe (6) of 1.25 to 5 is maintained, and/or
a ratio of the diameter DP of the cavity (5) in the region between the exit opening of the cooling pipe (6) and the base of the cavity (5) or the end face (2.3) of the shaft element (2.1) and the internal diameter D of the cooling pipe (6) of 1.5 to 4 is maintained.

2. Torch according to Claim 1, **characterized in that** a bore (2.5) is configured in the shaft element (2.1) so as to be parallel with the longitudinal axis of the latter.

3. Torch according to one of the preceding claims, **characterized in that** the shaft element (2.1) is configured so as to taper in a conical manner in the direction of the exit opening of the cooling pipe (6).

4. Method for operating a torch according to one of the preceding claims, **characterized in that** the torch is operated at an electrical current of at least 250 A; whereby
a spacing H between the exit opening of the cooling pipe (6) and the base of the cavity (5) or the end face (2.3) of the shaft element (2.1) is maintained, and
the exit opening of the cooling pipe (6) and the cavity (5) in the region between the exit opening and the base of the cavity (5) or the end face (2.3) of the shaft element (2.1) are dimensioned thus, and
by way of the volumetric flow of the liquid coolant which is directed through the cooling pipe (6) a highly turbulent flow in which a Reynolds' number which is more than twice the critical Reynolds' number is maintained is configured after the exit from the exit opening.

## Revendications

1. Chalumeau pour la soudure à électrode au tungstène sous atmosphère inerte, dans lequel, dans un boîtier, une unité à électrode est maintenue au moyen d'un support d'électrode, l'unité à électrode étant entourée par une buse à gaz inerte et un dispositif de refroidissement se trouvant à l'intérieur du boîtier, à travers lequel un fluide de refroidissement liquide est guidé vers l'intérieur du boîtier et hors du boîtier et
l'unité à électrode est conçue avec au moins deux parties, une électrode en tungstène ou en alliage de tungstène, se rétrécissant de manière conique en direction d'une pièce, étant fixée par force et/ou par liaison de matière dans un élément de tige constitué d'un métal avec une conductivité thermique supérieure à 270 W/mK,
**caractérisé en ce que**
l'unité à électrode (2) est maintenue avec le support d'électrode (4) dans un logement sur le support d'électrode (4) exclusivement au moyen d'un ajustement serré et/ou par liaison de matière et, sur l'élément de tige (2.1), pour un positionnement défini, un embout en forme de bride (2.4) est réalisé et/ou une face frontale (2.3) de l'élément de tige (2.1) constitue une butée ou une butée est réalisée sur la face frontale (2.3) ; et
dans le support d'électrode (4) est prévu un espace creux (5) dans lequel et hors duquel un fluide de refroidissement liquide est guidé par l'intermédiaire d'un tube de refroidissement (6), l'ouverture de sortie du tube de refroidissement (6) étant orientée vers l'unité à électrodes (2) maintenue dans le support d'électrode (4) et étant disposée à une distance H par rapport au fond de l'espace creux (5) ou de la face frontale (2.3) de l'élément de tige (2.1) ;
un rapport entre la distance H et le diamètre intérieur D du tube de refroidissement (6) est de 1,25 à 5 et/ou
un rapport entre le diamètre DP de l'espace creux (5) dans la zone entre l'ouverture de sortie du tube de refroidissement (6) et le fond de l'espace creux (5) ou de la face frontale (2.3) de l'élément de tige (2.1) et le diamètre intérieur D du tube de refroidissement (6) de 1,5 à 4 est respecté.

2. Chalumeau selon la revendication 1, **caractérisé en ce que**, dans l'élément de tige (2.1), parallèlement à son axe longitudinal, est réalisé un alésage (2.5).

3. Chalumeau selon l'une des revendications précédentes, **caractérisé en ce que** l'élément de tige (2.1) est conçu de façon à s'étendre en se rétrécissant de manière conique en direction de l'ouverture de sortie du tube de refroidissement (6).

4. Procédé d'exploitation d'un chalumeau selon l'une des revendications précédentes, **caractérisé en ce que** le chalumeau est alimenté avec une intensité d'au moins 250 A ;
une distance H entre l'ouverture de sortie du tube de refroidissement (6) et le fond de l'espace creux (5) ou de la face frontale (2.3) de l'élément de tige (2.1) est respectée et
l'ouverture de sortie du tube de refroidissement (6) et l'espace creux (5) dans la zone entre l'ouverture de sortie et le fond de l'espace creux (5) ou de la face frontale (2.3) de l'élément de tige (2.1) sont dimensionnés afin de former, avec le débit volumique du fluide de refroidissement liquide, qui est guidé à travers le tube de refroidissement (6), un écoulement fortement turbulent vers la sortie hors de l'ouverture de sortie, dans lequel un nombre de Reynolds supérieur au double du nombre de Reynolds critique est respecté.
